# EUROPÄISCHE PATENTSCHRIFT

(11) **EP 2 568 333 B1**
(45) Veröffentlichungstag und Bekanntmachung des Hinweises auf die Patenterteilung: **09.11.2016**
(21) Anmeldenummer: 11007233.7
(22) Anmeldetag: 06.09.2011
(51) Int. Cl.: G03B 42/04

(54) **Vorrichtung, System und Verfahren zum Auslesen von in Speicherleuchtstoffplatten gespeicherten Röntgeninformationen**
Device, method and system for reading out x-ray information stored in storage phosphor plates
Dispositif, système et procédé destinés à la lecture d'informations radiographiques stockées dans des plaques fluorescentes de mémoire

(43) Veröffentlichungstag der Anmeldung: 13.03.2013
(73) Patentinhaber: Agfa HealthCare N.V., 2640 Mortsel (BE)
(72) Erfinder: Sandmann, Patrick, 81827München (DE); Pirmann, Anton, 81243 München (DE); Schindlbeck, Günther, 81545 München (DE); Hölzl, Johannes, 85630 Grasbrunn (DE); Behr, Sven, 81371 München (DE)
(74) Vertreter: Linsmeier, Josef

(56) Entgegenhaltungen:
- US-A- 3 409 149
- US-A- 4 495 634
- US-A- 4 889 233
- US-A- 5 210 416
- US-A- 5 265 865
- US-A- 5 441 251
- US-A- 6 068 439

## Beschreibung

Die vorliegende Erfindung betrifft eine Vorrichtung, ein System sowie ein entsprechendes Verfahren zum Auslesen von in Speicherleuchtstoffplatten gespeicherten Röntgeninformationen gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffplatte zu speichern. Zum Auslesen des latenten Bildes wird die Speicherleuchtstoffplatte mit Stimulationslicht bestrahlt und dabei zur Aussendung von Emissionslicht angeregt. Das Emissionslicht, dessen Intensität dem in der Speicherleuchtstoffplatte gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinischdiagnostischen Zwecken, bereitgestellt, indem sie an einem entsprechenden Ausgabegerät, wie z. B. einem Monitor und/oder Drucker, ausgegeben werden.

Bei Vorrichtungen und Systemen aus dem Stand der Technik sind verschiedene Mechanismen zur Entnahme der in einer Ausgangsposition, insbesondere in einer Kassette, befindlichen Speicherleuchtstoffplatte aus der Ausgangsposition bzw. Kassette vorgesehen, wobei insbesondere bei einfachen Mechanismen nicht in allen Anwendungsfällen auch eine zuverlässige Entnahme und/oder Rückführung der Speicherleuchtstoffplatte gewährleistet werden kann.

Aus US 4,889,233 ist bekannt, eine in einer Kassette befindliche Speicherleuchtstoffplatte mittels einer rotierenden Walze aus der Kassette heraus zu befördern. Die Walze wird mit Hilfe eines zusätzlichen Schwenkmechanismus relativ zu Kassette versetzt. Aus US 5,265,865 ist bekannt, die Speicherleuchtstoffplatte mittels eines Stiftes, welcher in in der Speicherleuchtstoffplatte vorgesehene Löcher eingreift und durch einen nicht näher dargestellten zusätzlichen Mechanismus relativ zur Kassette bewegt wird, aus der Kassette zu entnehmen. US 4,495,634 zeigt ein Gerät zum Befördern von zu belichtenden Röntgenfilmen mittels Greifern oder Saugnäpfen, welche durch einen nicht näher dargestellten Mechanismus relativ zu den Röntgenfilmen bewegt werden.

Es ist Aufgabe der vorliegenden Erfindung, eine Vorrichtung, ein System sowie ein entsprechendes Verfahren zum Auslesen von Speicherleuchtstoffplatten anzugeben, welche bzw. welches bei einfachem Aufbau eine möglichst zuverlässige Entnahme und/oder Rückführung der Speicherleuchtstoffplatte aus der bzw. in die Ausgangsposition, insbesondere Kassette, ermöglicht.

Diese Aufgabe wird durch die Vorrichtung, das System bzw. das Verfahren gemäß den unabhängigen Ansprüchen gelöst.

Die erfindungsgemäße Vorrichtung umfasst eine Aufnahmeeinrichtung zur Aufnahme einer, insbesondere in einer Kassette befindlichen, Speicherleuchtstoffplatte, eine Entnahmeeinrichtung zur Entnahme der Speicherleuchtstoffplatte aus der Aufnahmeeinrichtung und eine Ausleseeinrichtung zum Bestrahlen der aus der Aufnahmeeinrichtung entnommenen Speicherleuchtstoffplatte mit Stimulationslicht und zum Erfassen von hierbei in der Speicherleuchtstoffplatte angeregtem Emissionslicht und zeichnet sich dadurch aus, dass die Entnahmeeinrichtung mindestens ein mit der Speicherleuchtstoffplatte koppelbares Entnahmeelement aufweist, welches sich entlang einer gekrümmten und in der Nähe der Aufnahmeeinrichtung in einen im Wesentlichen geraden Verlauf übergehenden Bahn, insbesondere Kulissenbahn, geführt wird.

Das erfindungsgemäße System umfasst eine Speicherleuchtstoffplatte sowie die erfindungsgemäße Vorrichtung.

Das erfindungsgemäße Verfahren weist folgende Schritte auf: Entnahme einer, insbesondere in einer Kassette befindlichen, Speicherleuchtstoffplatte aus einer Aufnahmeeinrichtung und Auslesen der aus der Aufnahmeeinrichtung entnommenen Speicherleuchtstoffplatte durch Bestrahlen der Speicherleuchtstoffplatte mit Stimulationslicht und Erfassen von hierbei in der Speicherleuchtstoffplatte angeregtem Emissionslicht, wobei zur Entnahme der Speicherleuchtstoffplatte ein Entnahmeelement entlang einer gekrümmten und in der Nähe der Aufnahmeeinrichtung in einen im Wesentlichen geraden Verlauf übergehenden Bahn, insbesondere Kulissenbahn, geführt und mit der Speicherleuchtstoffplatte gekoppelt wird.

Die Erfindung basiert auf dem Gedanken, das Entnahmeelement entlang einer Kurve zu führen, wobei das Entnahmeelement bei einer bestimmten Position auf der Kurve selbsttätig an die in einer Ausgangsposition, insbesondere in einer Kassette, befindliche Speicherleuchtstoffplatte ankoppelt, im weiteren Kurvenverlauf die Speicherleuchtstoffplatte zumindest teilweise aus der Ausgangsposition herausbewegt und schließlich bei einer weiteren Position auf der Kurve wieder selbsttätig von der Speicherleuchtstoffplatte entkoppelt wird.

So kann das Entnahmeelement beispielsweise als Haken ausgebildet sein, welcher sich aufgrund seiner Kurvenbewegung zur Speicherleuchtstoffplatte hin bewegt und in einen in der Speicherleuchtstoffplatte vorgesehenen entsprechenden Hakeneingriff eingreift und sich nach dem Transport der Speicherleuchtstoffplatte über eine bestimmte Wegstrecke aufgrund seiner Kurvenbewegung von der Speicherleuchtstoffplatte weg wieder selbsttätig vom Hakeneingriff löst.

In besonders vorteilhafter Weise kommt die Erfindung zur Geltung, wenn eine Kopplung von Entnahmeelement und Speicherleuchtstoffplatte kraftschlüssig erfolgt, beispielsweise augrund magnetischer Anziehungskräfte. So kann beispielsweise das Entnahmeelement als Magnet ausgebildet sein, welcher sich aufgrund der Kurvenbewegung zunächst zur Speicherleuchtstoffplatte hin bewegt und mittels magnetischer Anziehungskräfte mit der zumindest in Teilbereichen ferromagnetischen Speicherleuchtstoffplatte gekoppelt wird. Aufgrund seiner Bewegung entlang einer gekrümmten Bahn wird sich der Magnet wieder von der Speicherleuchtstoffplatte wegbewegen und sich dabei selbsttätig von dieser lösen, d.h. der Kraftschluss aufgrund magnetischer Kräfte reißt ab.

Wie die beschriebenen Anwendungsbeispiele veranschaulichen, kann aufgrund der Erfindung sowohl bei der Kopplung als auch bei der Entkopplung des Entnahmeelements mit bzw. von der Speicherleuchtstoffplatte auf zusätzliche Kopplungs- bzw. Entkopplungsmechanismen, wie z.B. sich schließende bzw. öffnende Greiferzangen, verzichtet werden, ohne dass die Zuverlässigkeit der Entnahme bzw. Rückführung der Speicherleuchtstoffplatte aus der bzw. in die Kassette beeinträchtigt wird.

Zusammenfassend ist daher festzuhalten, dass durch die Erfindung eine zuverlässige Entnahme und/oder Rückführung der Speicherleuchtstoffplatte aus der bzw. in die Ausgangsposition, insbesondere aus der bzw. in die Kassette, bei vereinfachtem Aufbau ermöglicht wird.

Vorzugsweise verläuft die Ebene der gekrümmten Bahn des Entnahmeelements im Wesentlichen senkrecht zur Ebene der Speicherleuchtstoffplatte. Dadurch lässt sich auf einfache Weise erreichen, dass sich das Entnahmeelement bei der Bewegung entlang eines Teils der gekrümmten Bahn zur Speicherleuchtstoffplatte hin und entlang eines weiteren Teils der gekrümmten Bahn wieder von der Speicherleuchtstoffplatte weg bewegt, so dass dieses selbsttätig an die Speicherleuchtstoffplatte ankoppeln und wieder von dieser abkoppeln kann.

Bei einer weiteren bevorzugten Ausgestaltung ist vorgesehen, dass zumindest ein Abschnitt der gekrümmten Bahn im Wesentlichen ellipsenförmig, insbesondere kreisförmig, ist. Solche Bahnverläufe lassen sich auf besonders einfache Weise realisieren, beispielsweise durch Rollen oder Walzen mit kreisrundem Querschnitt oder Kurbel- und/oder Exzenterantriebe, und weisen gleichzeitig eine Form auf, durch welche ein sicheres An- und Abkoppeln des Entnahmeelements ermöglicht wird.

Vorzugsweise weist das Entnahmeelement ein magnetisches Element auf, über welches das Entnahmeelement mit der Speicherleuchtstoffplatte magnetisch gekoppelt werden kann.

Die Speicherleuchtstoffplatte ist vorzugsweise zumindest in dem Bereich, in welchem das Entnahmeelement und die Speicherleuchtstoffplatte in Kontakt kommen, insbesondere im Randbereich der Speicherleuchtstoffplatte, permanentmagnetisch und/oder ferromagnetisch. Dies kann beispielsweise dadurch realisiert werden, dass die Speicherleuchtstoffplatte eine Trägerschicht mit einer darauf befindlichen Speicherleuchtstoffschicht aufweist, wobei in der Trägerschicht ein oder mehrere permanentmagnetische und/oder ferromagnetische Bereiche vorgesehen sind. Insbesondere weist die Trägerschicht eine sich im Wesentlichen über die gesamte Fläche der Trägerschicht erstreckende permanentmagnetische und/oder ferromagnetische Schicht, beispielsweise eine Metallfolie, auf. Durch derart ausgebildete Speicherleuchtstoffplatten wird im Fall von magnetisch ausgestalteten Entnahmeelementen eine besonders hohe Zuverlässigkeit bei der Entnahme und Rückführung aus der bzw. in die Kassette gewährleistet.

Bei einer weiteren bevorzugten Weiterbildung der Erfindung ist das Entnahmeelement an einer drehbaren Rolle oder Walze angeordnet. Auch durch die Verwendung von Rollen bzw. Walzen wird insbesondere eine kreisförmige Bahnbewegung des Entnahmeelements auf einfache, robuste und kostengünstige Weise realisiert.

Bei einer weiteren bevorzugten Ausgestaltung der Erfindung ist eine Transporteinrichtung zum Transportieren der Speicherleuchtstoffplatte relativ zur Ausleseeinrichtung vorgesehen, wobei die Entnahmeeinrichtung zur Beförderung der entnommenen Speicherleuchtstoffplatte zur Transporteinrichtung hin und/oder von der Transporteinrichtung weg ausgebildet ist. Als Transporteinrichtung dienen z.B. eine oder mehrere Walzen, durch welche die Speicherleuchtstoffplatte am abgelenkten Stimulationslichtstrahl der Ausleseeinrichtung vorbei transportiert wird. Die Entnahmeeinrichtung ist hierbei vorzugsweise so ausgestaltet, dass diese die Speicherleuchtstoffplatte an die Transporteinrichtung übergibt und dann von der Speicherleuchtstoffplatte entkoppelt ist. Dies hat den Vorteil, dass der weitere Transport der Speicherleuchtstoffplatte an der Ausleseeinrichtung vorbei nicht mehr durch die Entnahmeeinrichtung beeinflusst werden kann und etwaige Erschütterungen oder Gleichlaufschwankungen nicht mehr an die Speicherleuchtstoffplatte weitergegeben werden können, während diese gerade ausgelesen wird.

Vorzugsweise weist die Transporteinrichtung einen Walzenantrieb und mindestens eine Walze auf, welche durch den Walzenantrieb in Rotation versetzt werden kann und mindestens einen magnetischen Bereich aufweist. Dadurch kann eine Speicherleuchtstoffplatte, welche permanentmagnetische und/oder ferromagnetische Bereiche, vorzugsweise in der Trägerschicht, aufweist, mittels nur einer Walze auf einfache und zuverlässige Weise transportiert werden. Die Verwendung von nur einer magnetischen Walze anstatt der üblicherweise eingesetzten nichtmagnetischen Doppelwalzen hat außerdem den besonderen Vorteil, dass eine Übergabe der Speicherleuchtstoffplatte von der Entnahmeeinrichtung an die Transporteinrichtung dadurch besonders einfach und zuverlässig ist, dass die zu übergebende Speicherleuchtstoffplatte von der magnetischen Walze bereits durch magnetische Anziehungskräfte "aufgegriffen" wird, wenn diese noch nicht die obere Scheitellinie der Walze - entsprechend der Berührungslinie bei einer Doppelwalze - erreicht hat. Insgesamt werden dadurch die Entnahme und Übergabe der Speicherleuchtstoffplatte besonders sicher.

Es ist außerdem bevorzugt, dass die Entnahmeeinrichtung zur Beförderung der entnommenen Speicherleuchtstoffplatte in das Innere der Vorrichtung ausgebildet ist. Die Speicherleuchtstoffplatte befindet sich vorzugsweise in einer Kassette, welche von außen in eine am Gehäuse der Vorrichtung befindliche Aufnahmeeinrichtung eingegeben wird. Ein Teilabschnitt der Kassette ragt nach der Eingabe der Kassette in das Innere des Gehäuses der Vorrichtung. Durch einen geeigneten Öffnungsmechanismus wird die ins Innere des Gehäuses ragende Kassette geöffnet, und die im Inneren des Gehäuses der Vorrichtung angeordnete Entnahmeeinrichtung befördert sodann die in der Kassette befindliche Speicherleuchtstoffplatte in das Innere der Vorrichtung. Vorzugsweise ist die Entnahmeeinrichtung auch zu einer Rückführung der Speicherleuchtstoffplatte in die Aufnahmeeinrichtung, insbesondere in die Kassette, ausgebildet.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung einer Vorrichtung bzw. eines Systems zum Auslesen von Speicherleuchtstoffplatten;
- Fig. 2: eine schematische Darstellung der Entnahme einer Speicherleuchtstoffplatte aus einer Kassette bei einem ersten Beispiel;
- Fig. 3: eine schematische Darstellung der Entnahme einer Speicherleuchtstoffplatte aus einer Kassette bei einem zweiten Beispiel;
- Fig. 4: eine erfindungsgemäße Ausführung zur Entnahme einer Speicherleuchtstoffplatte aus einer Kassette;
- Fig. 5: ein drittes Beispiel zur Entnahme einer Speicherleuchtstoffplatte aus einer Kassette; und
- Fig. 6: eine schematische Darstellung der Entnahme einer Speicherleuchtstoffplatte aus einer Kassette eines vierten Beispiels.

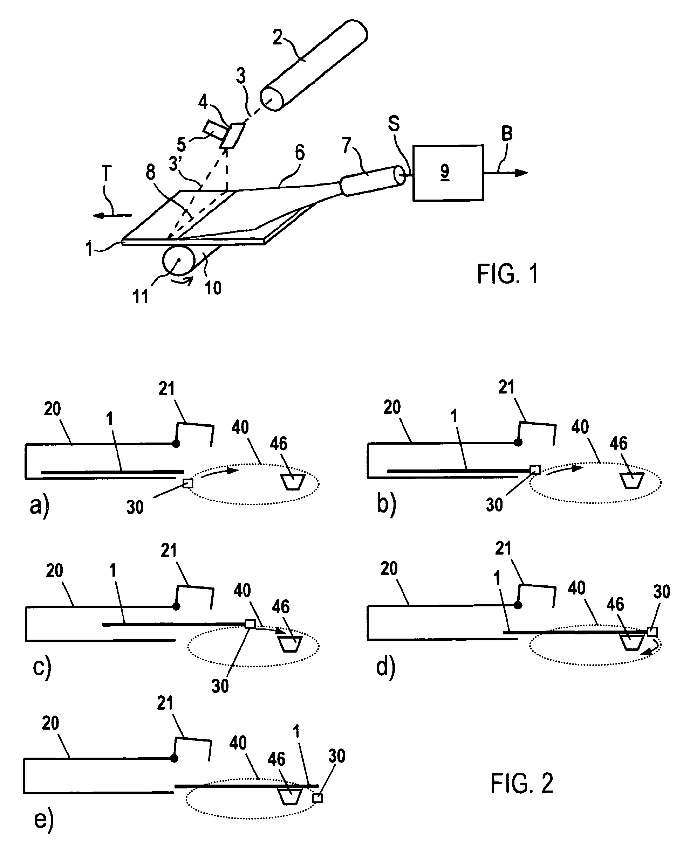

Figur 1 zeigt eine Auslesevorrichtung zum Auslesen einer Speicherleuchtstoffplatte 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffplatte 1 bewegt. Das Ablenkelement 4 weist eine reflektierende Fläche, insbesondere in Form eines Spiegels, auf, welche durch eine Antriebseinrichtung 5 in Oszillation versetzt wird. Alternativ kann das Ablenkelement 4 einen Polygonspiegel aufweisen, welcher durch die Antriebseinrichtung 5, in diesem Fall ein Motor, in Rotation versetzt wird und den Stimulationslichtstrahl 3 über die Speicherleuchtstoffplatte 1 lenkt.

Während der Bewegung des abgelenkten Stimulationslichtstrahls 3' über die Speicherleuchtstoffplatte 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Einrichtung 9 zugeführt, in welcher digitale Bildsignalwerte B für einzelne Bildpunkte des ausgelesenen Röntgenbildes abgeleitet werden.

Durch eine Beförderung der Speicherleuchtstoffplatte 1 in Transportrichtung T mittels einer Transporteinrichtung wird ein sukzessives Auslesen einzelner Zeilen 8 der Speicherleuchtstoffplatte 1 erreicht und damit ein zweidimensionales, aus einzelnen Bildpunkten mit jeweils einem zugehörigen Bildsignalwert B zusammengesetztes Röntgenbild erhalten.

Die Transporteinrichtung umfasst im gezeigten Beispiel eine Walze 10, die durch einen Walzenantrieb (nicht dargestellt) in Rotation um die Rotationsachse 11 versetzt wird. Die Speicherleuchtstoffplatte 1 liegt mit ihrer Unterseite auf der Walze 10 auf und wird aufgrund des hierbei auftretenden Reibschlusses durch eine Rotation der Walze 10 in Richtung T befördert.

Die Walze 10 weist im dargestellten Beispiel magnetische, vorzugsweise permanentmagnetische oder elektromagnetische, Elemente oder Bereiche auf, welche mit in der Speicherleuchtstoffplatte 1 vorgesehenen magnetischen oder ferromagnetischen Elementen oder Bereichen wechselwirken, so dass die Speicherleuchtstoffplatte 1 von der Walze 10 angezogen wird, was den Reibschluss wesentlich verstärkt und dadurch einen besonders zuverlässigen Transport der Speicherleuchtstoffplatte 1 gewährleistet.

Die magnetischen Elemente oder Bereiche können auf der zylinderförmigen Oberfläche der Walze 10 angebracht sein, beispielsweise in Form einer Beschichtung oder Ummantelung der Oberfläche mit einer magnetischen Schicht oder einem magnetischen Band. Vorzugsweise ist die Walze 10 selbst permanentmagnetisch oder ferromagnetisch, so dass die magnetische Schicht bzw. das magnetische Band bereits durch magnetische Anziehungskräfte auf der Walze 10 zuverlässig gehalten wird.

Alternativ oder zusätzlich können die magnetischen Elemente oder Bereiche aber auch im Inneren einer als Hohlkörper ausgebildeten Walze 10 vorgesehen sein, beispielsweise durch Anordnung auf einem im Inneren der Walze 10 befindlichen Träger. Der Hohlkörper der Walze 10 braucht in diesem Fall nicht magnetisch oder ferromagnetisch zu sein, sondern kann auch para- oder diamagnetisch sein. Vorzugsweise handelt es sich hierbei um einen Hohlkörper aus Aluminium.

Figur 2 zeigt eine schematische Darstellung der Entnahme einer Speicherleuchtstoffplatte 1 aus einer Kassette 20 bei einem ersten Beispiel. Wie in der hier gewählten Querschnittsdarstellung zu erkennen ist, befindet sich an einer Stirnseite der Kassette 20 eine Öffnung, welche durch eine im Bereich der Stirnseite angeordnete Klappe 21 verschließbar ist. Die Speicherleuchtstoffplatte 1 ist vorzugsweise in der Kassette 20 derart angeordnet und/oder dimensioniert, dass ein vorderes Ende der Speicherleuchtstoffplatte 1 bei geöffneter Klappe 21 etwas aus der stirnseitigen Öffnung der Kassette 20 ragt. Alternativ kann aber auch bevorzugt sein, dass das vordere Ende der Speicherleuchtstoffplatte 1 bei geöffneter Klappe 21 der Kassette 20 in etwa auf der Höhe der Öffnung der Kassette 20 oder auch ein Stück innerhalb der Öffnung der Kassette 20 liegt.

In der in Teil a) der Figur 2 dargestellten Phase des Entnahmevorgangs befindet sich ein nur stark schematisch dargestelltes Entnahmeelement 30 etwas unterhalb der teilweise aus der Öffnung der Kassette 20 ragenden Speicherleuchtstoffplatte 1. Das Entnahmeelement 30 weist vorzugsweise einen oder mehrere Permanentmagneten auf, welche mit dem vorderen Ende der Speicherleuchtstoffplatte 1, die zumindest im Bereich des vorderen Endes permanentmagnetisch und/oder ferromagnetisch ist, magnetisch gekoppelt werden können. Alternativ oder zusätzlich kann das Entnahmeelement 30 einen oder mehrere Greifer oder Haken aufweisen, welche am vorderen Ende der Speicherleuchtstoffplatte 1 angreifen bzw. einhaken können.

Das Entnahmeelement 30 ist in der Weise ausgestaltet und/oder angeordnet, dass dieses bei der Entnahme der Speicherleuchtstoffplatte 1 aus der Kassette 20 auf einer zumindest teilweise gekrümmten Bahn 40 bewegt wird und dabei aufgrund der ausgeführten Bahnbewegung selbsttätig an die Speicherleuchtstoffplatte 1 ankoppelt und selbsttätig wieder von dieser abkoppelt. Dies wird anhand der Teile b) bis e) der Figur 2 näher erläutert.

In der in Teil b) der Figur 2 dargestellten Phase hat das Entnahmeelement 30 die Höhe des vorderen Endes der Speicherleuchtstoffplatte 1 erreicht und kann an diesem magnetisch und/oder formschlüssig ankoppeln.

Nach Fortsetzung der Bewegung entlang der gekrümmten Bahn 40 (siehe eingezeichneter Pfeil) wird die in Teil c) der Figur 2 dargestellte Phase erreicht, bei welcher die Speicherleuchtstoffplatte 1 durch das Entnahmeelement 30 etwa zur Hälfte aus der Kassette 20 herausgeführt worden ist.

In der in Teil d) der Figur 2 dargestellten Phase ist das Entnahmeelement 30 weiter entlang der gekrümmten Bahn 40 bewegt worden, so dass sich die Speicherleuchtstoffplatte 1 bereits größtenteils außerhalb der Kassette 20 befindet. Wird die Bewegung des Entnahmeelements 30 auf der gekrümmten Bahn 40 fortgesetzt (siehe eingezeichneter Pfeil), so kommt die Speicherleuchtstoffplatte 1 in Kontakt mit einem Stützelement 46, welches beispielsweise eine im Wesentlichen parallel zur Speicherleuchtstoffplatte 1 verlaufende ebene Fläche aufweist, so dass die Speicherleuchtstoffplatte 1 der weiteren Bahnbewegung des Entnahmeelements 30 nicht mehr folgen kann. Die magnetische bzw. formschlüssige Kopplung des Entnahmeelements 30 an die Speicherleuchtstoffplatte 1 wird aufgehoben, indem diese gewissermaßen "abreißt".

Die Phase, in welcher die Speicherleuchtstoffplatte 1 vollständig aus der Kassette 20 entnommen worden ist und das Entnahmeelement 30 von der Speicherleuchtstoffplatte 1 entkoppelt ist, ist in Teil e) der Figur 2 dargestellt.

Die aus der Kassette 20 entnommene Speicherleuchtstoffplatte 1 kann nun mittels weiterer Transportmittel, beispielsweise einer Walze 10 (siehe Figur 1), an einer Ausleseeinrichtung vorbeitransportiert, dort ausgelesen und nach dem Auslesen wieder zurück in die in Teil e) der Figur 2 gezeigten Position befördert werden. Der Rücktransport der Speicherleuchtstoffplatte 1 mithilfe des Entnahmeelements 30 zurück in die Kassette 20 erfolgt dann entsprechend den in den Teilen a) bis e) der Figur 2 gezeigten Phasen in umgekehrter Reihenfolge. Die vorstehenden Erläuterungen zu den jeweiligen Figurenteilen gelten hierbei entsprechend.

Bei dem in Figur 2 gezeigten Beispiel bewegt sich das Entnahmeelement 30 entlang eines Teils einer ellipsenförmigen Bahn 40. Grundsätzlich kann eine Bewegung des Entnahmeelements 30 aber auch entlang von gekrümmten Bahnen erfolgen, die andere Formen aufweisen. Hierzu zählen beispielsweise parabolische, hyperbolische oder kreisförmige Bahnen sowie Ausschnitte aus solchen Bahnen.

Die Ebene der gekrümmten Bahn 40 liegt vorzugsweise senkrecht zur Ebene der Speicherleuchtstoffplatte 1, kann aber auch um einen endlichen Winkel gegen die Ebene der Speicherleuchtstoffplatte 1 geneigt sein.

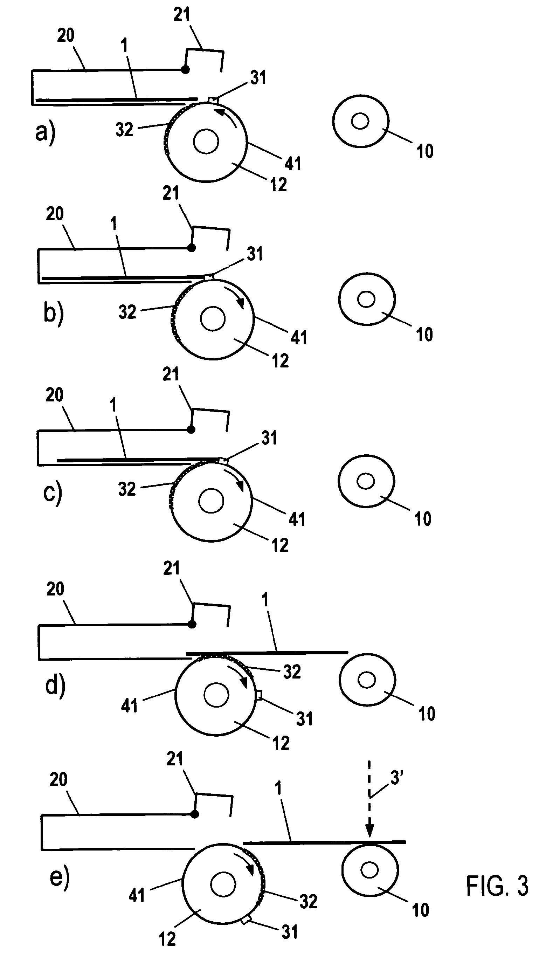

Figur 3 zeigt eine schematische Darstellung der Entnahme einer Speicherleuchtstoffplatte 1 aus einer Kassette 20 bei einem zweiten Beispiel. Bezüglich der Kassette 20 einschließlich Klappe 21 gelten die Ausführungen im Zusammenhang mit dem in Figur 2 gezeigten Beispiel entsprechend.

Im Bereich der Öffnung der Kassette 20 ist ein im Wesentlichen kreisrundes Rad 12 vorgesehen, an dessen Umfangsbereich ein erstes Entnahmeelement 31 sowie ein zweites Entnahmeelement 32 vorgesehen sind. Bei dem Entnahmeelement 31 handelt es sich vorzugsweise um einen Permanentmagneten oder einen Greifer, welcher an dem vorderen Ende der Speicherleuchtstoffplatte 1 mittels magnetischer Kräfte bzw. formschlüssig ankoppeln kann. Im Übrigen gelten für das Entnahmeelement 31 die Ausführungen im Zusammenhang mit dem in Figur 2 gezeigten Entnahmeelement 30 entsprechend.

Vorzugsweise ist das Entnahmeelement 31 gegenüber dem im Wesentlichen kreisförmigen Umfangsbereich des Rades 12 erhaben. Im Unterschied dazu ist das zweite Entnahmeelement 32 bezüglich des kreisförmigen Umfangs des Rades 12 weniger stark erhaben oder mit diesem bündig. Ferner erstreckt sich das zweite Entnahmeelement 32 über einen größeren Winkelbereich des Umfangs des Rades 12, als dies beim ersten Entnahmeelement 31 der Fall ist. Beispielsweise ist das erste Entnahmeelement 31 als quaderförmiger Magnet ausgebildet, während das zweite Entnahmeelement 32 als flächiger Bereich am Umfang des Rades 12 ausgebildet ist, beispielsweise in Form einer auf dem Umfang des Rades 12 aufgebrachten magnetischen Schicht.

In einem bestimmten Abstand zum Rad 12 ist eine Walze 10 angeordnet, mittels welcher die aus der Kassette 20 entnommene Speicherleuchtstoffplatte 1 an einer Ausleseeinrichtung (nicht dargestellt, vergleiche Figur 1) vorbeitransportiert wird.

In der in Teil a) von Figur 3 dargestellten Phase befindet sich das Rad 12 in einer Drehstellung, in welcher weder das erste noch das zweite Entnahmeelement 31 bzw. 32 mit der Speicherleuchtstoffplatte 1 gekoppelt ist.

Bei der in Teil b) von Figur 3 gezeigten Phase ist das Rad 12 etwas nach links gedreht, so dass das erste Entnahmeelement 31 mit dem vorderen Ende der Speicherleuchtstoffplatte 1 in Kontakt kommt und mittels magnetischer Anziehungskräfte mit der Speicherleuchtstoffplatte 1 gekoppelt wird.

Anschließend wird das Rad 12 in der entgegengesetzten Richtung gedreht, wobei das erste Entnahmeelement 31 die mit diesem gekoppelte Speicherleuchtstoffplatte 1 aus der Kassette 20 herausbefördert (Teil c) von Figur 3).

Durch Fortsetzung der Drehbewegung des Rades 12 wird die in Teil d) der Figur 3 dargestellte Phase erreicht, nachdem die magnetische Kopplung des ersten Entnahmeelements 31 mit der Speicherleuchtstoffplatte 1 durch "Abreißen" selbsttätig gelöst worden ist (vergleiche die obenstehenden Beispiele im Zusammenhang mit den Teilen d) und e) der Figur 2). In dieser Phase ist nunmehr das zweite Entnahmeelement 32 mit der Speicherleuchtstoffplatte 1 magnetisch gekoppelt, wobei letztere dann aufgrund die Drehbewegung des Rades 12 weiter in Richtung auf die Walze 10 befördert wird.

Bei Fortsetzung der Drehbewegung des Rades 12 wird schließlich auch das zweite Entnahmeelement 32 von der Speicherleuchtstoffplatte 1 selbsttätig entkoppelt, welche inzwischen auf der magnetischen Walze 10 (vgl. Ausführungen zur Walze 10 im Zusammenhang mit Figur 1) zu liegen kommt und von dieser am abgelenkten Stimulationslichtstrahl 3' der Ausleseeinrichtung vorbeitransportiert werden kann.

Nachdem die Speicherleuchtstoffplatte 1 in der Ausleseeinrichtung vollständig ausgelesen worden ist, wird diese mittels der Walze 10 wieder zum Rad 12 hin befördert und kann anschließend zunächst durch Kopplung mit dem zweiten Entnahmeelement 32 sowie anschließend mit dem ersten Entnahmeelement 31 entsprechend den Teilen a) bis e) der Figur 3 in umgekehrter Reihenfolge wieder in die Kassette 20 zurückbefördert werden.

Die Bewegung der Entnahmeelemente 31 und 32 entlang einer gekrümmten Bahn erfolgt also bei dem in Figur 3 gezeigten Beispiel entlang einer im Wesentlichen kreisförmigen Bahn, welche durch den kreisförmigen Umfang 41 des Rades 12 gegeben ist.

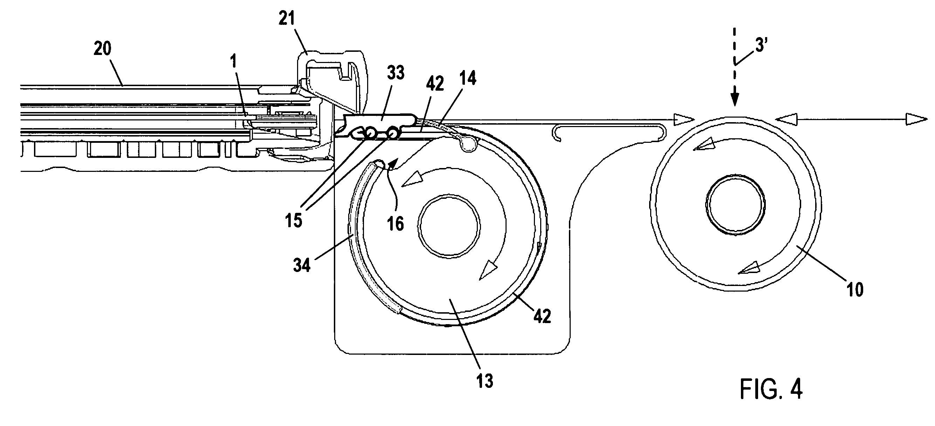

Figur 4 zeigt eine Ausführungsform der Erfindung, bei welcher es sich im Wesentlichen um eine Weiterbildung des in Figur 3 gezeigten Beispiels handelt.

Auch bei der hier gezeigten Darstellung ist die stirnseitige Klappe 21 der Kassette 20 geöffnet. An einer drehbar gelagerten und angetriebenen Transportrolle 13 ist ein erstes Entnahmeelement 33 über ein Koppelelement 14 angebracht. Das Koppelelement 14 ist beispielsweise als Lasche oder Band ausgebildet, die bzw. das mit einem Ende mit dem ersten Entnahmeelement 33 verbunden und mit den anderen Ende im Bereich des Umfangs der Transportrolle 13 angebracht, vorzugsweise schwenkbar gelagert, ist.

Am ersten Entnahmeelement 33 sind vorzugsweise Magnete vorgesehen, welche mit dem vorderen Ende der in der Kassette 20 befindlichen Speicherleuchtstoffplatte 1 magnetisch gekoppelt werden können. Das vordere Ende der Speicherleuchtstoffplatte 1 ist entsprechend permanentmagnetisch und/oder ferromagnetisch ausgestaltet.

Bei einer Drehung der Transportrolle 13 wird das erste Entnahmeelement 33 entlang einer Kulissenbahn 42 geführt, welche im Wesentlichen kreisförmig verläuft und in der Nähe der Öffnung der Kassette 20 in einen im Wesentlichen geraden Verlauf übergeht. Vorzugsweise wird das erste Entnahmeelement 33 hierbei mittels Kulissenrollen 15 geführt, um eine zuverlässige und lagerichtige Führung zu gewährleisten.

An der Transportrolle 13 ist ferner ein zweites Entnahmeelement 34 vorgesehen, bei welchem es sich vorzugsweise um einen flächigen magnetischen Bereich handelt, für welchen die obenstehenden Ausführungen zu dem in Figur 3 gezeigten zweiten Entnahmeelement 32 entsprechend gelten.

Zur Entnahme der in der Kassette 20 befindlichen Speicherleuchtstoffplatte 1 wird die Transportrolle 13 zunächst etwas nach links gedreht, so dass das erste Entnahmeelement 33 entlang des im Wesentlichen geraden Abschnitts der Kulisse 42 in Richtung auf das vordere Ende der Speicherleuchtstoffplatte 1 bewegt wird und an dieses magnetisch ankoppelt. Sodann wird die Drehrichtung der Transportrolle 13 umgekehrt, und das erste Entnahmeelement 33 zieht die Speicherleuchtstoffplatte 1 aus der Kassette 20 heraus.

Während der Drehung der Transportrolle 13 nach rechts wird das über das Koppelelement 14 an der Transportrolle 13 gelagerte erste Entnahmeelement 33 entlang des im wesentlichen kreisförmigen Abschnitts der Kulisse 42 geführt. Um bei einer weiteren Drehung der Transportrolle 13 ein Abkoppeln des Entnahmeelements 33 von der Speicherleuchtstoffplatte 1 zu fördern, ist in der Transportrolle 13 eine Ausnehmung 16 vorgesehen, in welcher das erste Entnahmeelement 33 während der fortgesetzten Drehbewegung der Transportrolle 13 zumindest teilweise aufgenommen werden kann.

Nach der automatischen Entkopplung des ersten Entnahmeelements 33 von der Speicherleuchtstoffplatte 1 wird letztere über das zweite Entnahmeelement 34 mit der Transportrolle 13 gekoppelt und bei fortgesetzter Drehung weiter in Richtung Walze 10 transportiert, bis auch das flächen- und/oder segmentförmige zweite Entnahmeelement 34 schließlich selbsttätig von der Speicherleuchtstoffplatte 1 abkoppelt und nach unten "abtaucht".

Die Speicherleuchtstoffplatte 1 liegt dann zumindest im Bereich ihres vorderen Endes auf der Walze 10 auf und kann, wie bereits im Zusammenhang mit Figur 1 dargestellt, in der Ausleseeinrichtung durch Erfassen des mittels eines bewegten Stimulationslichtstrahls 3' angeregten Emissionslichts ausgelesen werden.

Nach dem Auslesen der Speicherleuchtstoffplatte 1 wird diese mittels der Walze 10 wieder in Richtung der Transportrolle 13 bewegt und dann von dieser mithilfe des zweiten und ersten Entnahmeelements 34 bzw. 33 wie vorstehend beschrieben, jedoch in umgekehrter Reihenfolge, in die Kassette 20 zurückbefördert. Im Übrigen gelten für dieses Ausführungsbeispiel die obenstehenden Ausführungen im Zusammenhang mit dem in Figur 3 gezeigten Beispiel entsprechend.

Alternativ zu dem vorstehend im Einzelnen beschriebenen Beispiel ist es auch möglich, dass das kulissengeführte erste Entnahmeelement 33 nicht mittels der Transportrolle 13 entlang der Kulisse 42 geführt wird, sondern hierfür ein eigener Antrieb vorgesehen ist. Die Bewegung des ersten Entnahmeelements 33 einerseits sowie des zweiten Entnahmeelements 34 andererseits erfolgt bei dieser Alternative also jeweils separat. Alternativ oder zusätzlich ist es auch möglich, die Transportrolle 13 durch einen Antrieb anzutreiben, welcher auch zum Antreiben der Walze 10 vorgesehen ist, so dass anstelle jeweils eigener Antriebe für die Walze 10 und die Transportrolle 13 nur ein Antrieb erforderlich ist.

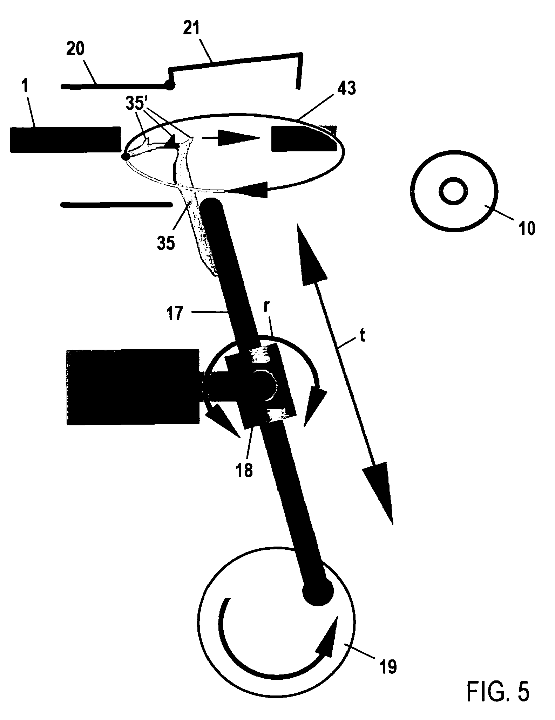

Figur 5 zeigt ein weiteres Beispiel zur Entnahme einer Speicherleuchtstoffplatte 1 aus einer Kassette 20, deren stirnseitige Klappe 21 geöffnet ist. Als Entnahmeelement 35 ist im dargestellten Beispiel ein hakenförmiges Element vorgesehen, welches an einer Kurbelstange 17 angebracht ist. Die Kurbelstange 17 ist in einer drehbar gelagerten Gelenkhülse 18 verschiebbar gelagert und an einem rotierenden Antriebsrad 19 außermittig drehbar angebracht. Durch eine Drehung des Antriebsrades 19 wird die Kurbelstange 17 in Richtung t in eine translatorische sowie gleichzeitig in Richtung r in eine rotatorische Bewegung versetzt.

Aufgrund der Überlagerung dieser Bewegungen wird das am anderen Ende der Kurbelstange 17 befindliche Entnahmeelement 35 entlang einer ellipsenförmigen Bahn 43 bewegt. Hierbei kann das hakenförmig ausgestaltete Entnahmeelement 35, welches vorzugsweise an einer der Unterseite der Speicherleuchtstoffplatte 1 zugewandten Oberfläche vorzugsweise zusätzliche Widerhaken 35' oder aufgeraute Bereiche aufweist, mit der Unterseite des vorderen Endes der Speicherleuchtstoffplatte 1 in Kontakt kommen, dort einhaken oder mit dem vorderen Ende zumindest reibschlüssig gekoppelt werden, so dass bei einer Fortsetzung der Bewegung des Entnahmeelements 35 entlang der Bahn 43 die Speicherleuchtstoffplatte 1 an ihrem vordern Ende mittels des Entnahmeelements 35 aus der Kassette 20 herausbefördert und in Richtung der im Bereich der Ausleseeinrichtung vorgesehenen Walze 10 transportiert und an diese übergeben werden kann.

Aufgrund der Führung des Entnahmeelements 35 entlang der ellipsenförmigen Bahn 43 wird die formschlüssige und/oder reibschlüssige Kopplung zwischen dem Entnahmeelement 35 einerseits und dem vorderen Ende der Speicherleuchtstoffplatte 1 andererseits automatisch gelöst, wenn sich das Entnahmeelement 35 auf einer der vorliegend dargestellten Position gegenüberliegenden Seite der ellipsenförmigen Bahn 43 und/oder unterhalb dieser Position befindet. Entsprechend kann durch eine Umkehrung der Drehbewegung des Antriebsrades 19 das Entnahmeelement 35 an der Speicherleuchtstoffplatte 1 formschlüssig und/oder reibschlüssig ankoppeln und diese wieder in Richtung der Kassette 20 zurückbefördern.

Im vorliegenden Beispiel erfolgt eine Kopplung zwischen dem hakenförmigen Entnahmeelement 35 und dem vorderen Ende der Speicherleuchtstoffplatte 1 formschlüssig, insbesondere durch Eingreifen des Hakens, und/oder reibschlüssig, insbesondere durch eine Kontaktierung der Oberseite des Hakens, die aufgeraut oder mit Widerhaken 35' versehen ist, mit der Unterseite der Speicherleuchtstoffplatte 1. Alternativ oder zusätzlich ist es aber auch möglich, das Entnahmeelement 35 magnetisch auszugestalten, so dass dieses alternativ bzw. zusätzlich durch magnetische Kräfte mit dem zumindest im Bereich des vorderen Endes permanentmagnetischen und/oder ferromagnetischen Speicherleuchtstoffplatte 1 gekoppelt werden kann. Im Übrigen gelten für dieses Bespiel die vorstehenden Ausführungen insbesondere im Zusammenhang mit dem in Figur 2 gezeigten Beispiel entsprechend.

In dem in Figur 5 gezeigten Beispiel wird die gekrümmte Kurve 43 durch eine sogenannte Kurbelschleife realisiert. Alternativ ist es aber auch möglich, eine gekrümmte Bahn über Kurvenscheiben, Kurvengetriebe, Exzentergetriebe, einen kurvenförmig angeordneten Riemenantrieb oder kurvenförmig gestaltete Verfahrwege, die mittels einfacher Lager in einer Kulisse abgefahren werden, zu realisieren.

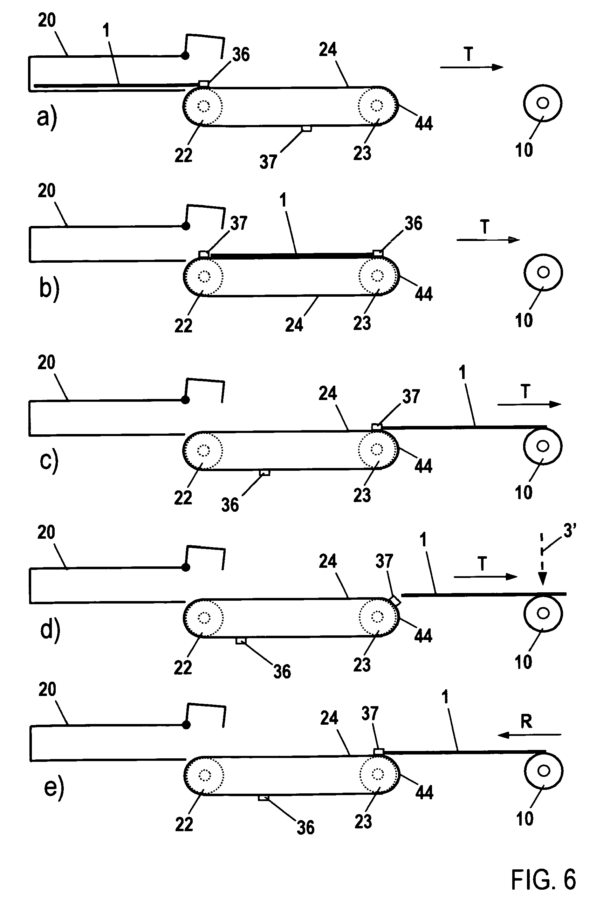

Figur 6 zeigt eine schematische Darstellung der Entnahme einer Speicherleuchtstoffplatte 1 aus einer Kassette 20. In dem gezeigten Beispiel ist ein erstes Entnahmeelement 36 an einem Riemen 24 angebracht, welcher über zwei Umlenkrollen 22 und 23 geführt ist. Durch Drehung der Umlenkrollen 22 und 23, von denen zumindest eine durch einen geeigneten Antrieb in Rotation versetzt werden kann, wird die relative Lage des ersten Entnahmeelements 36 in Bezug auf die Kassette 20 bzw. die in der Kassette 20 befindliche Speicherleuchtstoffplatte 1 verändert.

Am Riemen 24 ist ferner ein zweites Entnahmeelement 37 angeordnet, dessen Abstand zum ersten Entnahmeelement 36 entlang des Riemens 24 vorzugsweise etwas größer oder gleich der Länge der aus der Kassette 20 zu entnehmenden Speicherleuchtstoffplatte 1 ist. Eine Walze 10, mittels welcher die Speicherleuchtstoffplatte 1 an einer Ausleseeinrichtung vorbeitransportiert werden kann, ist von den beiden Umlenkrollen 22 und 23 in Transportrichtung T beabstandet angeordnet.

Bei der in Teil a) der Figur 6 dargestellten Phase der Entnahme wurde das erste Entnahmeelement 36 mittels Drehung der Umlenkrollen 22 und 23 und entsprechender Verschiebung des Riemens 24 in eine Position gebracht, in welcher dieses mit dem vorderen Ende der Speicherleuchtstoffplatte 1 in Kontakt kommt. Wie bereits im Zusammenhang mit den in den Figuren 2 und 3 gezeigten Beispielen erläutert, kann das erste Entnahmeelement 36 ein Magnet und/oder ein mechanisches Koppelelement, beispielsweise ein mechanischer Greifer oder Haken, sein. Vorzugsweise umfasst das erste Entnahmeelement 36 einen oder mehrere Permanentmagnete, welche am Riemen 24 befestigt sind. Das erste Entnahmeelement wird in der gezeigten Position mittels magnetischer Kräfte bzw. form- und/oder kraftschlüssig mit der Speicherleuchtstoffplatte 1 gekoppelt.

Durch eine Rechtsdrehung der Umlenkrollen 22 und 23 wird das auf dem Riemen 24 befindliche erste Entnahmeelement 36 sowie die mit diesem gekoppelte Speicherleuchtstoffplatte 1 in Transportrichtung T aus der Kassette 20 herausbefördert.

In Teil b) der Figur 6 ist eine Phase dargestellt, in welcher die Speicherleuchtstoffplatte 1 vollständig aus der Kassette 20 entnommen worden ist und auf dem oberen Trum des Riemens 24 aufliegt. Das vordere Ende der Speicherleuchtstoffplatte 1 ist noch immer mit dem ersten Entnahmeelement gekoppelt. Da der Abstand des zweiten Entnahmeelements 37 vom ersten Entnahmeelement 36 nur geringfügig größer ist als die Länge der Speicherleuchtstoffplatte 1, befindet sich das zweite Entnahmeelement nunmehr nahe dem hinteren Ende der Speicherleuchtstoffplatte 1.

Durch Fortsetzung der Rotation der Umlenkrollen 23 und 24 folgt das erste Entnahmeelement 36 der gekrümmten Bahn um die Umlenkrolle 23 herum, bis sich schließlich die Koppelung mit der Speicherleuchtstoffplatte 1 automatisch löst, wie bereits im Zusammenhang mit den Beispielen in den Figuren 2 und 3 ausführlich beschrieben worden ist.

Bei einer weiteren Fortsetzung der Drehbewegung der Umlenkrollen 22 und 23 wird dann die Speicherleuchtstoffplatte 1 an ihrem hinteren Ende durch das zweite Entnahmeelement 37 weiter in Transportrichtung T befördert, d.h. geschoben. Diese Phase ist in Teil c) der Figur 6 zu einem Zeitpunkt dargestellt, in welchem die von dem zweiten Entnahmeelement 37 geschobene Speicherleuchtstoffplatte 1 mit ihrem vorderen Ende bereits auf der unterhalb der Ausleseeinrichtung befindlichen Walze 10 zu liegen kommt.

Bei fortgesetzter Drehung der Umlenkrollen 22 und 23 folgt das auf dem Riemen 24 angebrachte zweite Entnahmeelement ebenfalls der im Wesentlichen kreisförmig gekrümmten Bahn 44 entlang des äußeren Umfangs der Umlenkrolle 23, so dass das zweite Entnahmeelement 37 nach unten "abtaucht" und die Speicherleuchtstoffplatte 1 nunmehr vollständig von der Entnahmeeinrichtung abgekoppelt ist und nur noch durch die Walze 10 in Transportrichtung T am abgelenkten Stimulationslichtstrahl 3' der Ausleseeinrichtung vorbeitransportiert wird.

Nach dem Auslesen der in der Speicherleuchtstoffplatte 1 gespeicherten Röntgeninformationen wird diese mittels der Walze 10 in Rücktransportrichtung R wieder zum zweiten Entnahmeelement 37 befördert, welches zwischenzeitlich wieder in eine Position gebracht worden ist, in welcher dieses mit dem hinteren Ende der Speicherleuchtstoffplatt 1 in Kontakt kommen kann.

Das zweite Entnahmeelement 37 weist entsprechend dem ersten Entnahmeelement 36 permanentmagnetische Elemente und/oder mechanische Koppelelemente, wie zum Beispiel einen Greifer oder Haken, auf, mittels welcher dieses an die Speicherleuchtstoffplatte 1 ankoppeln kann und, bei entsprechender Drehung der Umlenkrollen 22 und 23 in umgekehrter Drehrichtung, das heißt nach links, die Speicherleuchtstoffplatte 1 in Rücktransportrichtung R wieder in Richtung der Kassette 20 befördern kann. Der Rücktransport der Speicherleuchtstoffplatte 1 in die Kassette 20 erfolgt hierbei entsprechend der vorstehend beschriebenen Abfolge in umgekehrter Reihenfolge.

Bei den vorstehend anhand der Figuren 2 bis 6 beschriebenen Beispielen erfolgt die Rückführung der Speicherleuchtstoffplatte 1 in die Kassette 20 im Wesentlichen in umgekehrter Reihenfolge wie bei deren Entnahme. Im Allgemeinen sind hierbei keine zusätzlichen, insbesondere mechanischen, Mittel oder Maßnahmen erforderlich, um ein selbsttätiges und zuverlässiges Entkoppeln der Speicherleuchtstoffplatte 1 vom jeweiligen Entnahmeelement 30 bis 37 zu gewährleisten.

Um das selbsttätige Entkoppeln zu unterstützen bzw. noch zuverlässiger zu machen, ohne dabei gleichzeitig den apparativen Aufwand zu erhöhen, ist es zusätzlich möglich, die Trägheit der Speicherleuchtstoffplatte 1 auszunutzen. Dies kann vorzugsweise auf zwei unterschiedliche Arten durchgeführt werden.

Bei einer ersten Variante werden die Entnahmeelemente 30 bis 37, welche die Speicherleuchtstoffplatte 1 in die Kassette 20 zurücktransportiert haben, beschleunigt, nachdem die Speicherleuchtstoffplatte 1 in der Kassette 20 abgelegt worden ist. Die Beschleunigung ist hierbei vorzugsweise so groß, dass die magnetische Verbindung zwischen der Speicherleuchtstoffplatte 1 und dem jeweiligen Entnahmeelement 30 bis 37 abreißt.

Bei einer zweiten Variante wird die Speicherleuchtstoffplatte 1 bei ihrem Rücktransport in die Kassette 20 sehr schnell bewegt, wobei die Entnahmeelemente 30 bis 37 kurz vor dem Erreichen der Endposition, in welcher sich die Speicherleuchtstoffplatte 1 vollständig in der Kassette 20 befindet, ruckartig stehen bleiben. Durch die bewegte Masse der Speicherleuchtstoffplatte 1 wird der magnetische Schluss mit dem Entnahmeelement 30 bis 37 gelöst, so dass die Speicherleuchtstoffplatte 1 vom rückführenden Entnahmeelement 30 bis 37 getrennt wird.

Auch diese Maßnahmen tragen zu einer besonders zuverlässigen Entnahme und/oder Rückführung der Speicherleuchtstoffplatte 1 aus der bzw. in die Ausgangsposition, insbesondere Kassette 20, bei gleichzeitig einfachem Aufbau bei.

## Patentansprüche

1. Vorrichtung zum Auslesen von in einer Speicherleuchtstoffplatte (1) gespeicherten Röntgeninformationen mit
einer Aufnahmeeinrichtung (20), insbesondere einer Kassette, zur Aufnahme einer Speicherleuchtstoffplatte (1),
einer Entnahmeeinrichtung zur Entnahme der Speicherleuchtstoffplatte (1) aus der Aufnahmeeinrichtung und
einer Ausleseeinrichtung (2, 3 - 7) zum Bestrahlen der aus der Aufnahmeeinrichtung (20) entnommenen Speicherleuchtstoffplatte (1) mit Stimulationslicht (3, 3') und zum Erfassen von hierbei in der Speicherleuchtstoffplatte (1) angeregtem Emissionslicht,
**dadurch gekennzeichnet, dass**
die Entnahmeeinrichtung mindestens ein mit der Speicherleuchtstoffplatte (1) koppelbares Entnahmeelement (33) aufweist, welches entlang einer gekrümmten und in der Nähe der Aufnahmeeinrichtung (20) in einen im Wesentlichen geraden Verlauf übergehenden Bahn (42), insbesondere Kulissenbahn, geführt wird.

2. Vorrichtung nach Anspruch 1, wobei die Ebene der gekrümmten Bahn (42) des Entnahmeelements (33) im Wesentlichen senkrecht zur Ebene der Speicherleuchtstoffplatte (1) verläuft.

3. Vorrichtung nach Anspruch 1 oder 2, wobei zumindest ein Abschnitt der gekrümmten Bahn (42) im Wesentlichen ellipsenförmig, insbesondere kreisförmig, ist.

4. Vorrichtung nach einem der vorangehenden Ansprüche, wobei das Entnahmeelement (33) ein magnetisches Element aufweist, über welches das Entnahmeelement (33) mit der Speicherleuchtstoffplatte (1) gekoppelt werden kann.

5. Vorrichtung nach einem der vorangehenden Ansprüche, wobei das Entnahmeelement (33) an einer drehbaren Rolle oder Walze angeordnet ist.

6. Vorrichtung nach einem der vorangehenden Ansprüche mit einer Transporteinrichtung (10) zum Transportieren der Speicherleuchtstoffplatte (1) relativ zur Ausleseeinrichtung (2, 4 - 7), wobei die Entnahmeeinrichtung zur Beförderung der entnommenen Speicherleuchtstoffplatte (1) zur Transporteinrichtung (10) hin und/oder von der Transporteinrichtung (10) weg ausgebildet ist.

7. Vorrichtung nach Anspruch 6, wobei die Transporteinrichtung (10) mindestens eine Walze (10) aufweist, welche mindestens einen magnetischen Bereich aufweist und durch einen Walzenantrieb in Rotation versetzt werden kann.

8. Vorrichtung nach einem der vorangehenden Ansprüche, wobei die Entnahmeeinrichtung zur Beförderung der entnommenen Speicherleuchtstoffplatte (1) in das Innere der Vorrichtung ausgebildet ist.

9. Vorrichtung nach einem der vorangehenden Ansprüche, wobei die Entnahmeeinrichtung zu einer Rückführung der Speicherleuchtstoffplatte (1) in die Aufnahmeeinrichtung (20), insbesondere in die Kassette, ausgebildet ist.

10. System zum Auslesen von in einer Speicherleuchtstoffplatte (1) gespeicherten Röntgeninformationen mit einer Speicherleuchtstoffplatte (1), **gekennzeichnet durch**
eine Vorrichtung nach einem der vorangehenden Ansprüche.

11. System nach Anspruch 10, wobei die Speicherleuchtstoffplatte (1) zumindest in einem, insbesondere im Randbereich der Speicherleuchtstoffplatte (1) befindlichen, Teilbereich permanentmagnetisch und/oder ferromagnetisch ist.

12. Verfahren zum Auslesen von in einer Speicherleuchtstoffplatte (1) gespeicherten Röntgeninformationen mit folgenden Schritten:
Entnahme einer Speicherleuchtstoffplatte (1) aus einer Aufnahmeeinrichtung, insbesondere aus einer Kassette (20), und
Auslesen der aus der Aufnahmeeinrichtung entnommenen Speicherleuchtstoffplatte (1) durch Bestrahlen der Speicherleuchtstoffplatte (1) mit Stimulationslicht (3, 3') und Erfassen von hierbei in der Speicherleuchtstoffplatte (1) angeregtem Emissionslicht,
**dadurch gekennzeichnet, dass**
zur Entnahme der Speicherleuchtstoffplatte (1) ein Entnahmeelement (33) entlang einer gekrümmten und in der Nähe der Aufnahmeeinrichtung (20) in einen im Wesentlichen geraden Verlauf übergehenden Bahn (42), insbesondere Kulissenbahn, geführt und mit der Speicherleuchtstoffplatte (1) gekoppelt wird.

## Claims

1. Device for reading out X-ray information stored in a storage phosphor plate (1), comprising
a accommodating means (20), in particular a cassette, for accommodating a storage phosphor plate (1),
a removal means for removing the storage phosphor plate (1) from the accommodating means, and
a read-out means (2, 3-7) for irradiating the storage phosphor plate (1) which was removed from the accommodating means (20) with stimulating light (3, 3') and for capturing emission light which is thereby stimulated in the storage phosphor plate (1),
**characterized in that**
the removal means comprises at least one removal element (33) which can be coupled to the storage phosphor plate (1) and which is guided along a curved path (42), in particular a slide path, which transitions into a substantially linear course in the vicinity of the accommodating means (20).

2. Device according to claim 1, wherein the plane of the curved path (42) of the removal element (33) runs substantially perpendicular to the plane of the storage phosphor plate (1).

3. Device according to claim 1 or 2, wherein at least one section of the curved path (42) is substantially elliptical, in particular circular.

4. Device according to any one of the preceding claims, wherein the removal element (33) comprises a magnetic element by means of which the removal element (33) can be coupled to the storage phosphor plate (1).

5. Device according to any one of the preceding claims, wherein the removal element (33) is arranged at a rotatable cylinder or roller.

6. Device according to any one of the preceding claims, comprising a transport means (10) for transporting the storage phosphor plate (1) relative to the read-out means (2, 4-7), wherein the removal means is configured to transport the removed storage phosphor plate (1) to the transport means (10) and/or from the transport means (10).

7. Device according to claim 6, wherein the transport means (10) comprises at least one roller (10) which comprises at least one magnetic area and can be put into rotation by means of a roller drive.

8. Device according to any one of the preceding claims, wherein the removal means is configured to transport the removed storage phosphor plate (1) into the inside of the device.

9. Device according to any one of the preceding claims, wherein the removal means is configured to return the storage phosphor plate (1) into the accommodating means (20), in particular into the cassette.

10. System for reading out X-ray information stored in a storage
phosphor plate (1), comprising a storage phosphor plate (1),
**characterized by**
a device according to any one of the preceding claims.

11. System according to claim 10, wherein the storage phosphor plate (1) is permanently magnetic and/or ferromagnetic in at least one subarea which is located in particular in the edge region of the storage phosphor plate (1).

12. Method for reading out X-ray information stored in a storage phosphor plate (1), comprising the following steps:
removal of a storage phosphor plate (1) from an accommodating means, in particular from a cassette (20), and
reading out the storage phosphor plate (1) which was removed from the accommodating means by irradiating the storage phosphor plate (1) with stimulating light (3, 3') and by capturing emission light which is thereby stimulated in the storage phosphor plate (1),
**characterized in that**
for removing the storage phosphor plate (1), a removal means (33) is guided along a curved path (42), in particular a slide path, which transitions into a substantially linear course in the vicinity of the accommodating means (20), and is coupled to the storage phosphor plate (1).

## Revendications

1. Dispositif de lecture d'informations radiographiques stockées dans une plaque luminescente à mémoire (1), comprenant un moyen récepteur (20), en particulier une cassette, servant à recevoir une plaque luminescente à mémoire (1),
un moyen de reprise servant à reprendre la plaque luminescente à mémoire (1) du moyen récepteur, et
un moyen de lecture (2, 3-7) servant à irradier la plaque luminescente à mémoire (1) reprise du moyen récepteur (20) avec de la lumière de stimulation (3, 3') et à capter la lumière d'émission stimulée dans la plaque luminescente à mémoire (1) lors de cette irradiation,
**caractérisé en ce que**
le moyen de reprise comprend au moins un élément de reprise (33) pouvant être couplé à la plaque luminescente à mémoire (1) et qui est guidé le long d'une trajectoire courbée (42), en particulier une trajectoire glissante, qui se transforme en une trajectoire substantiellement linéaire à proximité du moyen récepteur (20).

2. Dispositif selon la revendication 1, **caractérisé en ce que** le plan de la trajectoire courbée (42) de l'élément de reprise (33) s'étend substantiellement perpendiculairement au plan de la plaque luminescente à mémoire (1).

3. Dispositif selon la revendication 1 ou 2, **caractérisé en ce qu'**au moins une section de la trajectoire courbée (42) est substantiellement elliptique, en particulier circulaire.

4. Dispositif selon l'une quelconque des revendications précédentes, **caractérisé en ce que** l'élément de reprise (33) comprend un élément magnétique au moyen duquel l'élément de reprise (33) peut être couplé à la plaque luminescente à mémoire (1).

5. Dispositif selon l'une quelconque des revendications précédentes, **caractérisé en ce que** l'élément de reprise (33) est disposé à un cylindre ou rouleau rotatif.

6. Dispositif selon l'une quelconque des revendications précédentes, comprenant un moyen de transport (10) servant à transporter la plaque luminescente à mémoire (1) de façon relative au dispositif de lecture (2, 4-7), ledit moyen de reprise étant configuré de façon à transporter la plaque luminescente à mémoire (1) reprise en l'acheminant vers le moyen de transport (10) et/ou en l'éloignant du moyen de transport (10).

7. Dispositif selon la revendication 6, **caractérisé en ce que** le moyen de transport (10) comprend au moins un rouleau (10) comprenant au moins une zone magnétique et peut être mis en rotation au moyen d'un entraînement par rouleaux.

8. Dispositif selon l'une quelconque des revendications précédentes, **caractérisé en ce que** le moyen de reprise est configuré de façon à transporter la plaque luminescente à mémoire (1) reprise dans l'intérieur du dispositif.

9. Dispositif selon l'une quelconque des revendications précédentes, **caractérisé en ce que** le moyen de reprise est configuré de façon à retourner la plaque luminescente à mémoire (1) dans le moyen récepteur (20), en particulier dans la cassette.

10. Système de lecture d'informations radiographiques stockées dans une plaque luminescente à mémoire (1), comprenant une plaque luminescente à mémoire (1),
**caractérisé par**
un dispositif selon l'une quelconque des revendications précédentes.

11. Système selon la revendication 10, **caractérisé en ce que** la plaque luminescente à mémoire (1) a une magnétisation permanente et/ou est ferromagnétique dans au moins une zone partielle située dans la région de bord de la plaque luminescente à mémoire (1).

12. Procédé de lecture d'informations radiographiques stockées dans une plaque luminescente à mémoire (1), comprenant les étapes suivantes:
la reprise d'une plaque luminescente à mémoire (1) d'un moyen récepteur, en particulier d'une cassette (20), et la lecture de la plaque luminescente à mémoire (1) reprise du moyen récepteur en irradiant la plaque luminescente à mémoire (1) avec de la lumière de stimulation (3, 3') et en captant la lumière d'émission stimulée dans la plaque luminescente à mémoire (1) lors de cette irradiation,
**caractérisé en ce que**
afin d'assurer la reprise de la plaque luminescente à mémoire (1), un moyen de reprise (33) est guidé le long d'une trajectoire courbée (42), en particulier une trajectoire glissante, qui se transforme en une trajectoire substantiellement linéaire à proximité du moyen récepteur (20), et est couplé à la plaque luminescente à mémoire (1).
